# EUROPEAN PATENT APPLICATION

(11) **EP 4 769 106 A1**
(43) Date of publication of application: **01.07.2026**
(21) Application number: 24307309.5
(22) Date of filing: 27.12.2024
(51) Int. Cl.: G06F 3/04883, G06N 3/02, G06N 3/084, G06V 10/82, G06V 30/148, G06V 30/32

(54) **GENERATING INK POINT SEQUENCES**

(71) Applicant: MyScript, 44339 Nantes Cedex 3 (FR)
(72) Inventor: Cerovic, Cyril, 44339 NANTES (FR)
(74) Representative: RVDB Nantes

(57) **Abstract**

A system and method for generating a sequence of ink points to simulate a handwriting style of an identified user, comprising: receiving (S110) a character string input, each character of the character string having a character label; selecting (S120) the identified user; retrieving (S130), for each character label, a subsequence of a fixed number of ink points; selecting (S140), for each retrieved ink point, a first set of ink point features; generating, for each retrieved ink point, a second set of random ink point features; applying (S160), for each character label, the first and second sets of ink point features to a reverse process of a trained diffusion model of a predetermined number of diffusion steps to generate, at each diffusion step, a version of the second set of ink point features corresponding to the respective diffusion step, to depict a handwriting version of the respective character label until all the character labels have been depicted; concatenating (S170) the depicted handwritten versions of the respective character labels.

## Description

### Field of the invention

The present disclosure relates generally to the field of computing device interfaces capable of processing or recognizing user handwriting input of text. In particular, the present disclosure concerns computing devices and corresponding methods for generating ink point sequences.

### Background

Handwriting recognition can be implemented in computing devices to input and process various types of handwritten input elements, hand-drawn or handwritten by a user, such as text content (e.g., alphanumeric characters) or non-text content (e.g., shapes, drawings). Once inputted on a computing device, the input elements are usually displayed as digital ink and undergo handwriting recognition to be manipulated as objects, for example text objects such as characters, words, lines or paragraphs or non-text objects such as primitives or shapes. The user handwriting input is typically interpreted using a real-time handwriting recognition system or method.

One application of handwriting recognition in portable computing devices, such as smartphones and tablets, is in note taking. This particularly occurs in education and business settings where the user of the computing device captures notes, for example, during a lecture or meeting. Conventionally, available applications provide recognition of handwriting and conversion of the recognized handwriting into typeset text, with various feedback mechanisms to the user, but that is generally the extent of the interaction with the input. The user may desire further interaction with the text, such as editing the content or adding content from an external source to the original layout of the handwritten notes and the actual input handwriting itself, so-called digital ink. The user may desire to integrate external input within the handwritten notes respecting the original handwriting style. Each person has their own unique style of handwriting, whether it is everyday handwriting or their personal signature. Characteristics of handwriting include: the specific shape of letters, e.g. their roundness or sharpness; regular or irregular spacing between letters; the slope of the letters; the rhythmic repetition of the elements; the pressure to the paper; the average size of letters; the thickness of letters. The present application provides means and method to integrate external input, arising for example, from the spelling correction or an AI application, according to the handwriting style of a user.

### Summary of the invention

The examples of the present invention that are described herein below provide computing devices, methods and corresponding computer programs for generating an ink point sequence from a sequence of character labels wherein the ink point sequence depicts an input handwriting style version handwriting by a given user of the sequence of character labels.

According to a first aspect, the invention provides a method, for generating a sequence of ink points to simulate a handwriting style of an identified user, comprising: receiving a character string input, each character of the character string having a character label; selecting the identified user; retrieving, for each character label, a sequence of a predetermined number of ink points; selecting, for each retrieved ink point, a first set of ink point features; generating, for each retrieved ink point, a second set of random ink point features; applying, for each character label, the first and second sets of ink point features to a reverse process of a trained diffusion model of a predetermined number of diffusion steps to generate, at each diffusion step, a version of the second set of ink point features corresponding to the respective diffusion step, to depict a handwriting version of the respective character label until all the character labels have been depicted; concatenating the depicted handwritten versions of the respective character labels.

According to a particular embodiment, the first set of ink point features comprises a character feature, a user feature, a diffusion feature and context features, the second set of random ink point features comprises bounding box features and path features, and wherein the context features include first and second ink point features of respective neighboring characters.

According to a particular embodiment, the character feature corresponds to the label of the respective ink point.

According to a particular embodiment, the user feature corresponds to an identifier of the selected user.

According to a particular embodiment, the diffusion feature corresponds to the first step of the predetermined number of diffusion steps.

According to a particular embodiment, the bounding box features correspond to two sets of coordinates defining the location of a bounding box enclosing the sequence of the predetermined number of ink points of each character.

According to a particular embodiment, the path features comprise coordinates, a pen-up state, a segmentation state and an end-of-sequence state of the respective ink point.

According to a particular embodiment, the neighboring characters comprise the respective previous and following characters of each character.

According to a particular embodiment, the neighboring characters of the first character of the sequence of characters comprises the respective following character of the first character.

According to a particular embodiment, the neighboring character of the last character of the sequence of characters comprises the respective previous character of the last character.

According to a particular embodiment, the generating of the second set of random ink point features comprises: generating randomly the coordinates and the pen-up state of each defined ink point from a gaussian noise distribution.

According to a particular embodiment, the applying, for each character label, of the first and second sets of ink point features to the trained reverse process of the diffusion model comprises, for each diffusion step of the diffusion model: applying, the first and the generated second sets of ink point features to a trained neural network, to predict noise of the second sets of ink point features of the respective diffusion step; and generating, at each diffusion step, the version of the second set of ink point features corresponding to the respective diffusion step by deducting the predicted noise from the respective second set of ink point features, and wherein the first set of ink point features may be applied to the trained neural network at only the first diffusion step, or at each diffusion step, or at some diffusion steps of the diffusion model.

According to a particular embodiment, the diffusion model is trained by: receiving handwritten text input by identified users, wherein the handwritten text is segmented into sequences of the predetermined number of ink points and recognized as character labels, corresponding to the characters of the recognized handwritten text; defining, for each ink point of each segmented sequence, the respective first and second sets of ink point features; performing, for each recognized character, a predetermined number of diffusion steps of a forward diffusion process to add noise to the defined second set of ink point features of the ink points of the respective sequence wherein the values of the final second sets of ink point features of the respective sequence are randomly selected from an isotropic Gaussian distribution; training the reverse diffusion process of the diffusion model to predict, for each character, the added noise comprised in the second set of ink point features by: for each character, selecting randomly a performed diffusion step from the predetermined number of diffusion steps and the respective first and second sets of ink point features from the sets of ink point features of the randomly selected diffusion step, wherein the sets of ink point features comprise the noise added at the randomly selected diffusion step; training the neural network applying the selected first and second sets of ink point features to the neural network to predict the added noise comprised in the respective second set of ink point features at the randomly selected diffusion step; and by optimizing a loss function between the predicted noise and the added noise comprised in the respective second set of ink point features.

According to a second aspect, the invention provides a computing device configured to generate a sequence of ink points to simulate a handwriting style of an identified user, comprising: an input string receiving module configured to receive a character string input, each character of the character string having a character label; an identified user selecting module configured to select the identified user; an ink point retrieving module configured to, for each character label, retrieve a sequence of a predetermined number of ink points; a first ink point features selecting module configured to, for each defined ink point, select a first set of ink point features; a second ink point features generating module configured to, for each defined ink point, generate a second set of random ink point features; a second set of ink point features regenerating module configured to apply, for each character label, the first and second sets of ink point features to a reverse process of a trained diffusion model of a predetermined number of diffusion steps to generate, at each diffusion step, a version of the second set of ink point features corresponding to the respective diffusion step, to depict a handwriting version of the respective character label until all the character labels have been depicted coupled with: a trained neural network configured, for each diffusion step of the trained diffusion model, to predict added noise comprised in the second sets of ink point features of the respective diffusion step from the first and the generated second sets of ink point features; and a noise deducting module configured to generate, at each diffusion step, the version of the second set of ink point features corresponding to the respective diffusion step by deducting the predicted noise from the respective second set of ink point features; a handwritten character concatenating module configured to concatenate the depicted handwritten versions of the respective character labels.

According to a third aspect, the invention provides a computing device configured to train a neural network comprising: a handwritten text receiving module configured to receive handwritten text input by identified users, wherein the handwritten text is recognized and segmented into sequences of the predetermined number of ink points corresponding to the characters of the recognized handwritten text; a first and second sets of ink point features defining module configured to define, for each ink point of each segmented sequence, the respective first and second sets of ink point features; a forward diffusion processor configured to perform, for each recognized character, a predetermined number of diffusion steps of a forward diffusion process to add noise to the defined second set of ink point features of the ink points of the respective sequence wherein the final second set of ink point features of the respective sequence corresponds to full noise; a reverse diffusion processor configured to train the reverse diffusion process of the diffusion model to predict, for each character, the added noise comprised in the second set of ink point features comprising: a random diffusion step selecting module configured to, for each character, select randomly a performed diffusion step from the predetermined number of diffusion steps and the respective first and second sets of ink point features from the sets of ink point features of the randomly selected diffusion step, wherein the sets of ink point features comprise the noise added at the randomly selected diffusion step; the neural network configured to predict the added noise comprised in the respective second set of ink point features at the randomly selected diffusion step by applying the selected first and second sets of ink point features; and a loss function optimizing module configured to train the neural network by comparing the predicted noise and the added noise comprised in the respective second set of ink point features.

Another way of defining the method for generating the sequence of ink points to simulate a handwriting style of an identified user may be as a method to generate a sequence of digital ink points imitating the handwriting style of an identified user. During a first step, a character string may be received as input. Then, the identified user style may be selected. In a next step, for each character of the string, a sequence of random ink point coordinates may be generating. For each character of the string, the sequence of ink point coordinates may be encoded into a sequence of ink point features. The second set of ink point features may include the encoded ink point features. For each character of the string, a set of contextual features that encode at least the respective character and the user style may be defined. The contextual features may be the first set of ink point features. Then, for each character of the string, a reverse process of a diffusion model, trained with a predetermined number of diffusion steps, may be initialized with the sequence of encoded ink point features. For each character of the string, at each diffusion step, a new encoded version of the ink point features may be generated in an autoregressive way and guided by the contextual features. , The new encoded version of the ink point features of each current diffusion step may be generated by applying the encoded version of ink point features generated at the previous diffusion step to the reverse process of the trained diffusion model., At the last diffusion step, for each character of the string, the last version of the ink point features may be decoded, to depict a handwriting version of the respective character. Finally, the depicted handwritten versions of the respective character of the string may be concatenated.

According to a particular embodiment, the encoding of the sequence of ink point coordinates may be a positional encoding. Positional encoding describes the location or positional information of an entity in a sequence so that each position is assigned a unique representation.

In a particular embodiment, a transformer type neural network is used to generate the encoded ink point features. The transformer may comprise a positional encoder and a positional decoder wherein the coordinates of each ink point are mapped to a vector.

Hence, the output of the positional encoder may be a matrix, where each row of the matrix represents the encoded ink point features of the sequence of ink points summed with their positional information.

According to a particular embodiment, the generating of the new encoded version of the ink point features at each diffusion step is guided by applying the contextual features of each character of the string to the reverse process of the trained diffusion model.

### Brief description of the drawings

The present system and method will be more fully understood from the following detailed description of the examples thereof, taken together with the drawings. In the drawings like reference numerals depict like elements. In the drawings:
FIG. 1 shows a block diagram of a computing device in accordance with an embodiment of the present invention.
FIG. 2 shows a block diagram of an example of the present method in accordance with an embodiment of the present invention.
FIG. 3 shows a flow diagram of a system for handwriting recognition in accordance with an embodiment of the present invention.
FIG. 4A - 4B show an example of a handwritten input text sampled in accordance with an embodiment of the present invention.
FIG. 5A - 5D show an example of a sequence of character labels, associated with the sequence of ink points, the first and second sets of ink point features generated by the computing device in accordance with an embodiment of the present invention.
FIG. 6A - 6D show ten illustrations of the path of the generated second sets of ink point features of the first character of the sequence of character labels of Figure 5A .
FIG. 7A - 7I show the illustrations of the concatenated physical trace of the sequence of character labels of Figure 5A generated at different diffusion steps, arbitrarily chosen, in accordance with an embodiment of the present invention.

### Detailed description

In the following detailed description, numerous specific details are set forth by way of examples in order to provide a thorough understanding of the relevant teachings. However, it should be apparent to those skilled in the art that the present teachings may be practiced without such details. In other instances, well-known methods, procedures, and/or components are described at a relatively high level, without detail, in order to avoid unnecessarily obscuring aspects of the present teachings.

The following description of the exemplary embodiments refers to the accompanying drawings. The following detailed description does not limit the invention. Instead, the scope of the invention is defined by the appended claims. In various embodiments as illustrated in the figures, a computing device, a corresponding method and a corresponding computer program are discussed.

The use of the term "text" in the present description is understood as encompassing all characters (e.g. alphanumeric characters or the like), and strings thereof, in any written language and any symbols used in written text.

The term "non-text" in the present description is understood as encompassing freeform handwritten or hand-drawn content (e.g. shapes, drawings, etc.) and image data. Non-text content defines graphic or geometric formations in linear or non-linear configurations, including containers, drawings, common shapes (e.g. arrows, blocks, etc.) or the like.

The terms "hand-drawing" and "handwriting" are used interchangeably herein to define the creating of digital content by users through use of their hands (or fingers) or an input device (hand-held stylus or digital pen, mouse...) on or with an input surface 4. The term "hand" or the like is used herein to provide concise description of the input techniques, however the use of other parts of a user's body for similar input is included in this definition, such as foot, mouth and eye.

A handwritten content in the present disclosure is understood as comprising one or multiple symbols (or characters), or a part thereof, created by a user through a process of handwriting in any suitable manner. Handwriting input may for instance comprise text and/or non-text content. Text may comprise various contents, such as characters and the like (e.g. alphanumeric characters), or strings thereof, in any written language and, more generally, any symbol, or part thereof, used in written text. Non-text content may comprise various contents, such as any handwritten shape, drawing, etc.

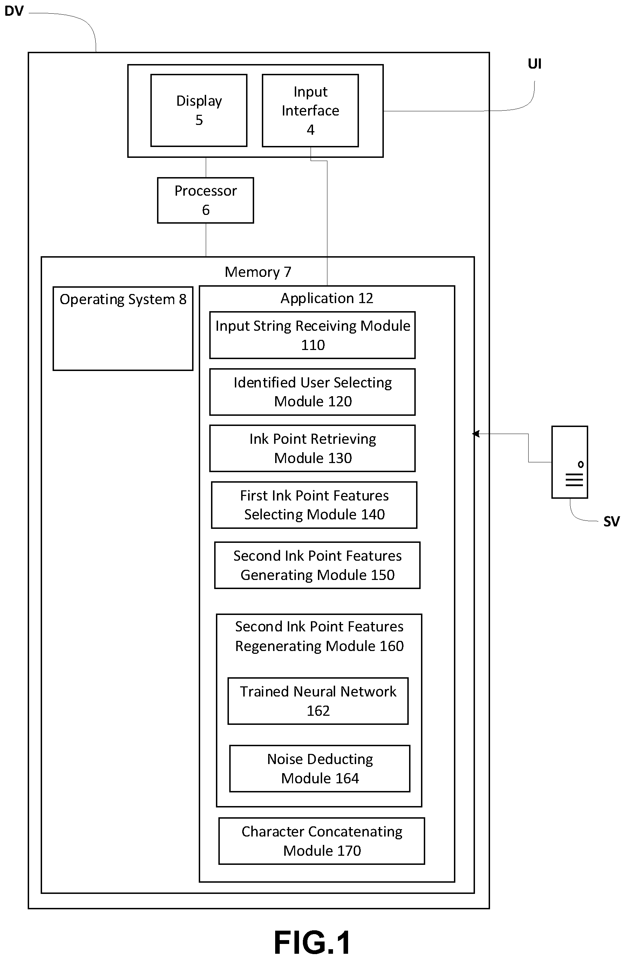

The various technologies described herein generally relate to capture, processing and management of hand-drawn or handwritten content on portable and non-portable computing devices, referenced hereinafter as DV, depicted in figure 1. The systems and methods described herein may utilize recognition of user's natural writing and drawing styles input to a computing device via an input surface 4, such as a touch sensitive screen (as discussed later).

In the following, it is assumed that the computing device DV is used to handwriting input by implementing a method for point sequence reconstruction according to particular embodiments of the invention. Some implementation details are provided here below for purely illustrative purpose, other embodiments being possible according to the present disclosure.

The computing device (or digital device) DV may be a computer desktop, laptop computer, tablet computer, e-book reader, mobile phone, smartphone, wearable computer, digital watch, interactive whiteboard, global positioning system (GPS) unit, enterprise digital assistant (EDA), personal digital assistant (PDA), game console, or the like. The computing device DV includes components of at least one processing element, some form of memory and input and output (I/O) devices. The component communicate with each other through inputs and outputs, such as connectors, lines, buses, links networks, or others known to the skilled person.

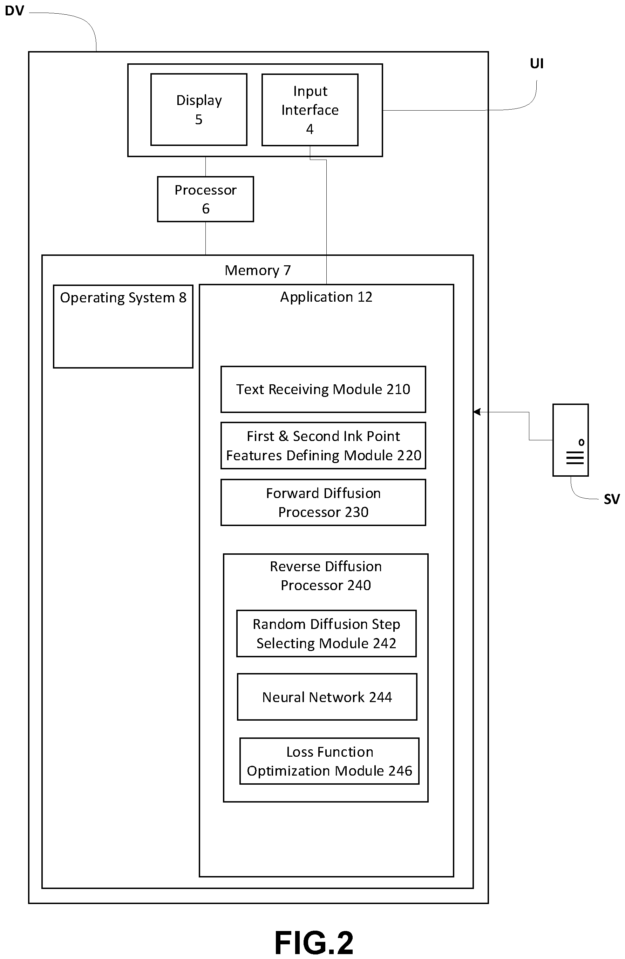

As shown in Figures 1 and 2, the computing device DV may comprise a user interface 4 comprising at least one display 5 for outputting data from the computing device such as images, text, and video. The display 5 may use LCD, plasma, LED, OLED, CRT, or any other appropriate technology that is or is not touch sensitive as known to those of ordinary skill in the art. At least part of the display is co-located with at least one input area. The input area may employ technology such as resistive, surface acoustic wave, capacitive, infrared grid, infrared acrylic projection, optical imaging, dispersive signal technology, acoustic pulse recognition, or any other appropriate technology as known to those of ordinary skill in the art to receive user input. The input area may be bounded by a permanent or video-generated border that clearly identifies its boundaries. Instead of, or additional to, an on-board display, the computing device DV may have a projected display capability.

The user interface 4 of the computing device DV may comprise an input interface 4 also other embodiments without such an input interface are also possible.

The computing device DV also includes a processor 6, which is a hardware device for executing software, particularly software stored in a memory 7. The processor 6 can be any custom made or commercially available general purpose processor, a central processing unit (CPU), commercially available microprocessors including a semiconductor based microprocessor (in the form of a microchip or chipset), microcontroller, digital signal processor (DSP), application specific integrated circuit (ASIC), field programmable gate array (FPGA) or other programmable logic device, discrete gate or transistor logic, discrete hardware components, state machine, or any combination thereof designed for executing software instructions known to those of ordinary skill in the art.

The memory 7 can include any one or a combination of volatile memory elements (e.g., random access memory (RAM, such as DRAM, SRAM, or SDRAM)) and nonvolatile memory elements (e.g., ROM, EPROM, flash PROM, EEPROM, hard drive, magnetic or optical tape, memory registers, CD-ROM, WORM, DVD, redundant array of inexpensive disks (RAID), another direct access storage device (DASD), or any other magnetic, resistive or phase-change nonvolatile memory). Moreover, the memory 7 may incorporate electronic, magnetic, optical, and/or other types of storage media. The memory can have a distributed architecture where various components are situated remote from one another but can also be accessed by the processor. Further, the memory 7 may be remote from the device, such as at a server or cloud-based system, which is remotely accessible by the computing device DV. The memory 7 is coupled to the processor 6, so the processor can read information from and write information to the memory 7. In the alternative, the memory 7 may be integral to the processor 6. In another example, the processor 6 and the memory 7 may both reside in a single ASIC or other integrated circuit.

The software in the memory 7 may include an operating system 8 and an application 12 in the form of a non- transitory computer readable medium having a computer readable program code embodied therein. The operating system 8 controls the execution of the application 12. The operating system 8 may be any proprietary operating system or a commercially or freely available operating system, such as WEBOS, WINDOWS^{®}, MAC and IPHONE OS^{®}, LINUX, and ANDROID. It is understood that other operating systems may also be utilized. Alternatively, the application of the present system and method may be provided without use of an operating system.

The application 12 (or computer program) includes one or more processing elements related to detection, management and treatment of user input (discussed in detail later). This computer program 12 may comprise instructions to implement a method according to particular embodiments of the invention, as further described below. The memory 7 may thus constitute a recording medium (or information medium) according to particular embodiments of the present invention, having stored thereon the computer program 12.

The software stored in memory 7 may also include one or more other applications related to handwriting recognition (HWR), different functions, or both. Some examples of other applications include a text editor, telephone dialer, contacts directory, instant messaging facility, computer-aided design (CAD) program, email program, word processing program, web browser, and camera.

The application 12, with support and compliance capabilities, may be a source program, executable program (object code), script, application, or any other entity having a set of instructions to be performed. When a source program, the program needs to be translated via a compiler, assembler, interpreter, or the like, which may or may not be included within the memory, so as to operate properly in connection with the operating system. Furthermore, the HWR system with support and compliance capabilities can be written as (a) an object oriented programming language, which has classes of data and methods; (b) a procedure programming language, which has routines, subroutines, and/or functions, for example but not limited to C, C++, Pascal, Basic, Fortran, Cobol, Perl, Java, Objective C, Swift, and Ada; or (c) functional programing languages for example but no limited to Hope, Rex, Common Lisp, Scheme, Clojure, Racket, Erlang, OCaml, Haskell, Prolog, and F#.

Handwriting text may be entered on or via the input surface and processed by the processor as digital ink. A user may enter a stroke with a finger or some instrument such as a pen or stylus suitable for use with the input surface.

Strokes entered on or via the input surface or touch based user interface 4 are processed by the processor as digital ink. A user may enter a stroke with a finger or some instrument such as a pen or stylus suitable for use with the input surface 4. The user may also enter a stroke by making a gesture above the input surface 4 if technology that senses motions in the vicinity of the input surface 4 is being used, or with a peripheral device of the computing device, such as a mouse or joystick. A stroke is characterized by at least the stroke initiation location, the stroke termination location, and the path connecting the stroke initiation and termination locations. Because different users may naturally write the same object, e.g., a letter, a shape, a symbol, with slight variations, the HWR system accommodates a variety of ways in which each object may be entered whilst being recognized as the correct or intended object.

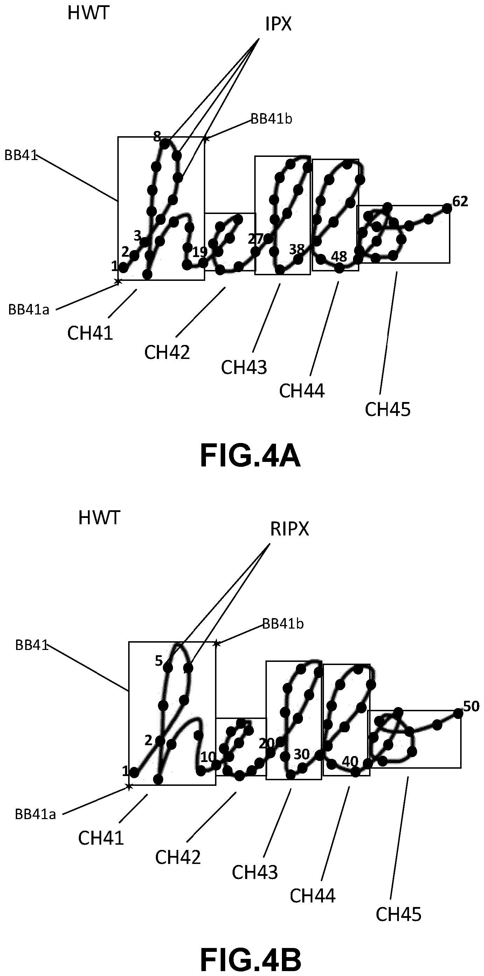

Handwriting text may be generated according to the handwriting style of an identified user, by carrying out the present system and method,. Each ink point of a handwritten text is characterized by an ink point sequence index indicating the position of the ink point in the ink point sequence. As illustrated on Figure 4A, the handwriting text HWT is represented by an ink point sequence (IP1 to IP62) capturing a handwritten path or physical trace generated by the computing device or made by the user.

A handwritten text comprises a plurality of ink points and a plurality of timestamps associated respectively with the plurality of ink points. The plurality of ink points are localized in a rectangular coordinate space with each ink point being associated with (X,Y) coordinates in the rectangular coordinate space. Therefore, each ink point is defined by a position IP(X), IP(Y) and an associated timestamp (t).

According to a particular embodiment depicted in Figure 1, when running the applications stored in the memory, for each step of the method for generating a sequence of ink points to simulate a handwriting style of an identified user of the present invention, the computing device DV may comprise a corresponding module configured to perform said step, namely: an input string receiving module 110, an identified user selecting module 120, an ink point retrieving module 130, a first ink point features selecting module 140, a second ink point features generating module 150, a second ink point features regenerating module 160, a neural network 162, a noise deducting module 164, a handwritten character concatenating module 170, a text receiving module 170,

According to a particular embodiment depicted in Figure 2, when running the applications stored in the memory, for each step of the method of training a diffusion model of the present invention, the computing device DV may comprise a corresponding module configured a first and second ink point feature sets defining module 220, a forward diffusion processor 230, a reverse diffusion processor 240, a random diffusion step selecting module 242 and a loss function optimization module 244.

The input string receiving module 110 is configured to receive an input string, each character of the character string having a character label. The input string may be obtained by typing via a keyboard, text input by voice recognition or stored in the memory. The sequence of character labels may be generated, following handwriting recognition, via a spell checker process for correcting the misspellings in a text handwritten via the input area 4.

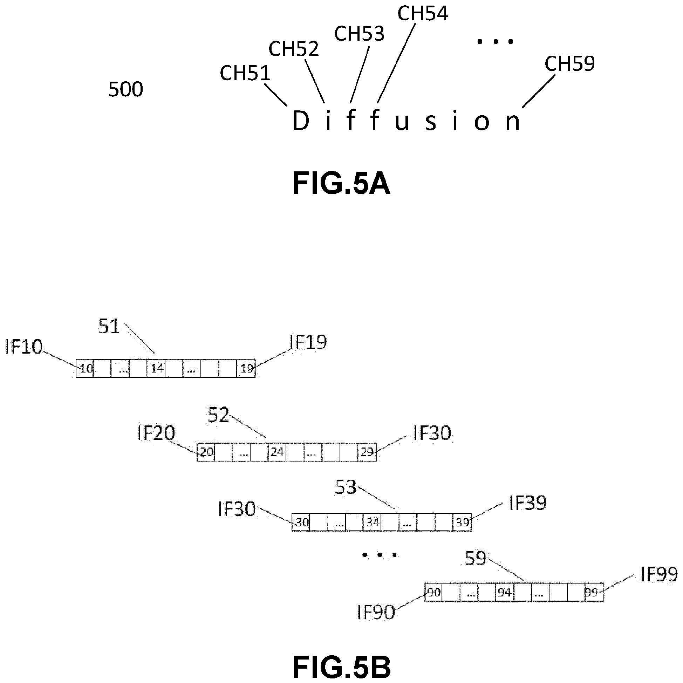

For example, Figure 5A shows a sequence 500 of nine character labels ("Diffusion") CH51 to CH59 entered via the keyboard as input to the present system and method.

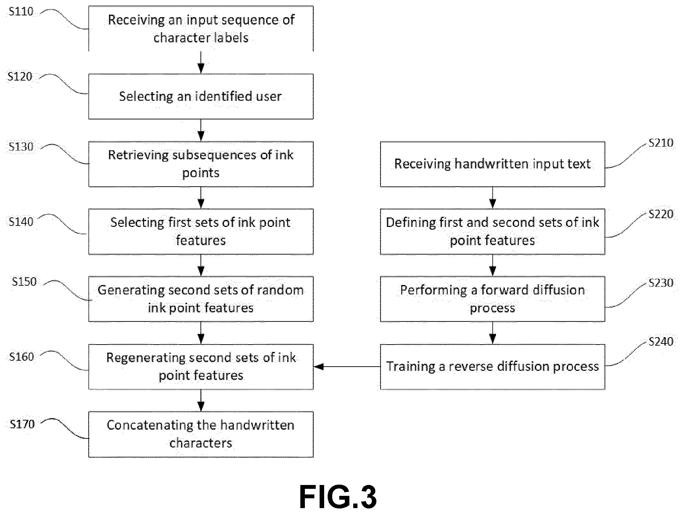

With the identified user selecting module 120, an identified user is selected. Samples of handwritten text of the identified users were provided during the method of training the diffusion model as described below with reference to Figure 3, the description of each step of the method may apply in an analogous manner to each corresponding module as shown in Figure 2 and further described below.

Selecting a user from a database of identified users may be performed through, e.g., a selection menu or other selection user interface module.

The ink point retrieving module 130 is configured to, for each received character label, retrieve a sequence of a predetermined or fixed number of ink points gathering all necessary features for defining a handwritten version of a character label including a physical path of the respective character label.

For example, Figure 5B illustrates nine retrieved sequences 51 to 59. Each sequence comprises ten ink points. The nine ink point sequences are represented by nine rectangles 51 to 59 including each the predetermined number of ink points represented by ten squares within the nine rectangles. Therefore, the squares with indexes 10 to 99 signify the sequence of ink points retrieved to further generate a handwritten version of the sequence of character labels simulating the handwriting of the selected user.

Each ink point of an ink point sequence comprises a first and second sets of ink point features IFX for defining a handwritten version of a character label.

The first set of ink point features 1IFX, comprises a character feature, a user feature, a diffusion feature and context features of the respective ink point.

The second set of ink point features 2IFX comprises features defining the actual data of a handwritten path of a character onto a rectangular coordinate space, including the bounding box features and the path features.

The first ink point features selecting module 140 is configured to, for each retrieved ink point, select a first set of ink point features. The first set of ink point features comprises features which are anticipated and defined, at each step of the current method, according to the received character input string, the selected user or the diffusion model on-going process including respectively the character feature, the user feature, the diffusion feature.

First, the first set of ink point features comprises features which are defined by the received character input string including the character feature and the context features.

The character feature defines, for each ink point, the character label to which it belongs. The character held by a current ink point is represented by a character embedding indicating the occurrence of one character as indexes of the respective dictionary. The character embedding includes an index used for retrieving the corresponding typeset character of the language. Each ink point is characterized by a character index indicating the position of the respective character in the sequence of characters.

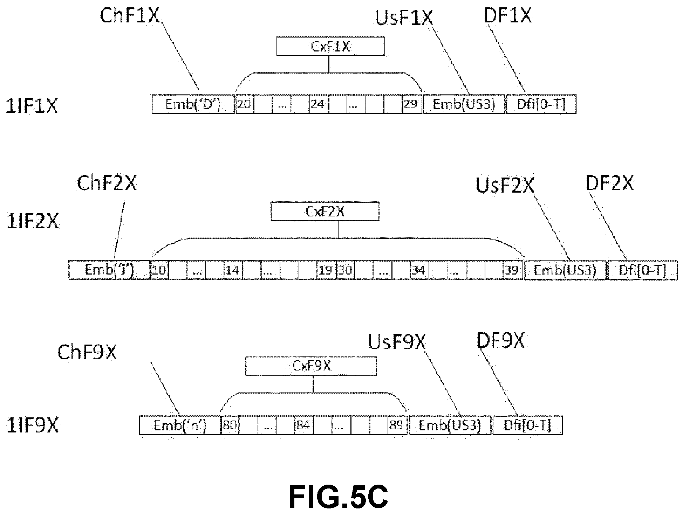

For example, on Figure 5C, the character features ChF1X in the first ink point feature sets for the ink points IP10 to IP19 is set as the embedding of the character 'D' (Emb('D')) defining the character label to which each ink point of the retrieved sub sequence 41 belongs.

The character feature ChF2X in the second ink point feature sets for the ink points IP20 to IP29 is set as the embedding of the character 'i' (Emb('i')) defining the character label to which each ink point of the retrieved sub sequence 42 belongs.

The character feature ChF9X in the last ink point feature sets for the ink points IP90 to IP99 is set as the embedding of the character 'n' (Emb('n')) defining the character label to which each ink point of the retrieved sub sequence 59 belongs.

The context features are defined, for each ink point, according to the sequence of character labels and the respective sequence of ink points wherein for each received character label, a sequence of ink points is associated. Each ink point of a sequence of ink point, representing a character, is associated with first and second sets of ink point features. The context features of each ink point include the first and second set of ink point features of neighboring characters. The neighboring characters are the respective previous and following characters of each character represented by an ink point.

For example, on Figure 5C, the neighboring characters of character CH52 are previous and following characters CH51 and CH53, respectively, therefore the context features CxF2X in the second ink point feature sets for the ink points IP20 to IP29 is set as the ten first 1IFX and second 2IFX sets of ink point features composing CH1 (IP10 to IP19) and the ten first and second sets of ink point features composing CH3 (IP30 to IP39).

The neighboring character of the first character CH51 is the following character CH52, therefore the context features CxF1X in the first ink point feature sets for the ink points IP10 to IP19 is set as the ten first and second sets of ink point features composing CH52 (IP20 to IP29).

The neighboring character of the last character CH59 is the previous character CH58, therefore the context features CxF9X in the last ink point feature sets for the ink points IP90 to IP99 is set as the ten sets of ink point feature of CH58 including the ten first and second sets of ink point features composing CH58 (IP80 to IP89).

The first set of ink point features comprises features which are defined by the selected user including the user feature. The sequence of ink points defines a version of a character handwritten by an identified user therefore each ink point is further characterized by the identified user as the source of the respective character. The identified user may be represented by a user embedding indicating users as indexes of a fixed size vector of identified users, said vector used to store identified users.

For example, on Figure 5C, the user features UsF1X, UsF2X and UsF9X in the first, second and last ink point feature sets for the ink points IP10 to IP19, the ink points IP20 to IP29 and the ink points IP90 to IP99, respectively is set as the embedding of a user identified with the index 3 (Emb(US3)) defining the handwriting style selected for generating the corresponding ink point data.

The first set of ink point features comprise features which are defined by the diffusion model on-going processes including the diffusion feature. The diffusion model comprises two processes: a forward diffusion process that gradually adds noise to handwriting input data until signal of the input data corresponds to full noise and a reverse diffusion process trained to remove the noise from the signal to produce sample data matching a version of the handwriting input data after finite time. The input data of the diffusion model is the second set of ink point features as further described. The diffusion processes are therefore defined by a predetermined number of steps of diffusion.

In the reverse diffusion process, the diffusion step is set from an initial step corresponding to full noise added to the second set of ink point features, to the final step corresponding to no noise added to the second set of ink point features.

For example, on Figure 5C, each of the first, second and last ink point feature sets for the ink points IP10 to IP19, the ink points IP20 to IP29 and the ink points IP90 to IP99, respectively have corresponding diffusion features DF1X, DF2X and DF9X. Each diffusion feature is set as an initial index of the reverse diffusion process. The diffusion features is incremented until the predetermined number of steps, set for example to 50 steps. The values of the diffusion features DF1X - DF9X of the ink point sets of the retrieved sequences 51 - 59 are all set respectively to the initial value and are incremented simultaneously according to the iteration of the reverse diffusion process as explained below.

The second ink point features generating module 150 is configured, for each defined ink point, to generate a second set of random ink point features.

The second set of ink point features comprise features defining data of a handwritten path of a character onto a rectangular coordinate space, including bounding box features and path features.

The bounding box features include two sets of coordinates defining the location of a bounding box enclosing the coordinates of the ink points of the sequence of ink points defining the character path to which an ink point belongs.

For example, on Figures 4A and 4B, the bounding box features of the ten first ink points 1 to 10 define the two opposite corners BB41a and BB41b of the bounding box BB41.

The path features describe an ink point of the retrieved sequence of ink points, including data defining coordinates of the ink point, a pen-up state, an end-of-character state (also referred to as segmentation state) and an end-of-sequence state of the respective ink point.

Each ink point coordinate may be encoded into a positional encoding. Positional encoding describes the location or positional information of an entity in a sequence so that each position is assigned a unique representation.

A transformer type neural network may be used to generate encoded ink point features. The transformer may comprise a positional encoder and a positional decoder wherein the coordinates of each ink point are mapped to a vector. Hence, the output of the positional encoder may be a matrix, where each row of the matrix represents the encoded ink point features of the sequence of ink points summed with their positional information.

The stroke initiation location and the stroke termination location may be captured as a Boolean ink point feature referred to as a true pen-up state at the last ink point of the stroke.

The pen-up state set as true indicates that a current ink point, included into the current stroke, is the end of the user original handwritten stroke. A pen-up state set as false indicates that the current ink point is concatenated with the following ink point in the user original handwritten stroke.

An end-of-sequence state set as true indicates that a current ink point is the last point of the sequence of ink points. Accordingly, an end-of-sequence state set as false indicates that a current ink point is not the last point of the sequence of ink points.

An end-of-character state set as true indicates that a current ink point is the last point of the current character, said last point corresponding to segmenting the sequence of ink points into the sequences of the characters. Accordingly, an end-of-character state set as false indicates that a current ink point is not the last point of the current character.

For each ink point, the coordinates, the pen-up state, the end-of-character state and the end-of-sequence state are generated randomly according to a Gaussian distribution (also referred to as normal distribution). For each ink point, the generated second set of random ink point features is set to an initial state wherein the diffusion feature is the first step of the reverse diffusion process and the random second set of ink point features are set to full noise. Therefore, the coordinates, the pen-up state, the end-of-sequence state and the end-of-character state are randomly selected according to the Gaussian distribution leading to an inconsistent handwritten path of characters at the earlier steps of diffusion.

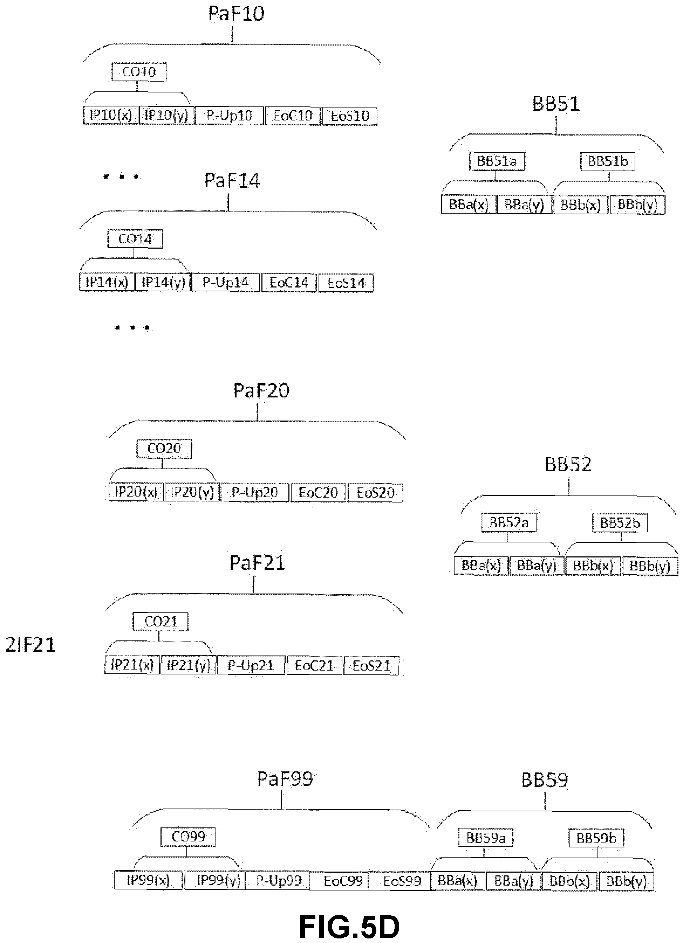

For example, for each defined ink point of the sequences 51, 52 until 59, shown on Figure 5B, the Figure 5D shows the second sets of ink point features 2IF10, 2IF14, 2IF20, 2IF21 and 2IF99 as illustrative examples for the ink points 10, 14, 20, 21 and 99. The second sets of ink point features comprise data intended at defining the handwritten path of a character label sequence 500. All the second sets of features are set randomly at the initial step of the reverse diffusion model process. The ink point features randomly set at the initial step include the bounding box features and the path features.

The bounding box features include two sets of coordinates defining the location of a bounding box enclosing the coordinates of the ink points of the sequence of ink points defining the character path to which an ink point belongs.

The bounding box features are set for each character sequence. Therefore, each ink point features (2IF10 - 2IF19) of the first sequence 51 comprise the same bounding box features including the coordinates of a first corner BB51a and opposite corner BB51b of a bounding box BB51. The bounding BB51 is defined to enclose all the ink points coordinates (CO10 - CO19) of the sequence 51.

Each set of ink point features (2IF10 - 2IF19) to (2IF90 - 2IF99) of each sequence (51 to 59 respectively), comprises the same bounding box features including the coordinates of a corner BBa and the opposite corner BBb of the bounding boxes BB51 to BB59. The bounding boxes BB51 to BB59 are defined to enclose all respective ink points coordinates (CO10 - CO19) to (CO90 - CO99) of the respective sequences 51 to 59.

The five path features (PaF10, PaF14, PaF20, PaF21 and PaF99) of each set of ink points (10 to 99) include the coordinates CO10 to CO99, the pen-up state P-Up10 to P-Up99, the End-Of-Character states EoC10 to EoC99 and the End-Of-Sequence states EoS10 to EoS99 of the of the respective ink points 10 to 99.

At the initial step, the coordinates of the two opposite corners (BBa and BBb) of the bounding box of each character (CH51 to CH59) are generated randomly among the rectangular coordinate space according to an isotropic Gaussian distribution.

Each set of coordinates IP(x) and IP(y) of the ink points of each sequence (51 to 59) of the characters are generated randomly, according to an isotropic Gaussian distribution, within the space defined by the corresponding character bounding box (BB51 to BB59).

Each pen-up state (P-Up) of the ink points (10 to 99) of each sequence of the character is generated randomly, according to an isotropic Gaussian distribution, as either a true or false, wherein a pen-up state set as true corresponds to a break of the physical path at the respective ink point.

Each End-of-Character (EoC) of the ink points (10 to 99) of each sequence of the character is generated randomly, according to an isotropic Gaussian distribution, as either a true or false, wherein an End-Of-Character-up state set as true corresponds to an end of the physical path at the respective ink point of the respective character.

Each End-of-Sequence (EoS) of the ink points (10 to 99) of the character sequence is generated randomly, according to an isotropic Gaussian distribution, as either a true or false, wherein an End-Of-Sequence-up state set as true corresponds to an end of the physical path at the respective ink point of the sequence of characters.

The second set of ink point features regenerating module 160 is configured to apply, for each character label, the first and second sets of ink point features as input variables to a reverse process of a trained diffusion model of a predetermined number of diffusion steps T to generate, at each diffusion step, a version of the second set of ink point features corresponding to the respective diffusion step to depict (i.e., define the handwritten path of) a handwriting version of the respective character label until all the character labels have been depicted.

As mentioned, the reverse diffusion process comprises a trained neural network 162 and a noise deducting module 164.

The trained neural network 162 is configured, for each diffusion step of the trained diffusion model, to predict as output variable the added noise comprised in the second sets of ink point features of the respective diffusion step from the first and the generated second sets of ink point features.

The neural network is trained to recognize the specific noise patterns introduced at each diffusion step. Consequently, the output noise pattern predicted at the specific step can be deducted from the input second ink point features to denoise the input variables accordingly.

The noise comprised in each second set of ink point features is predicted by the neural network according to the regulated variance schedule of added noise at each step wherein the neural network is preliminary trained according to the regulated schedule of the forward diffusion model. The regulated variance schedule is defined by the diffusion model and provides the varying function of space within which the randomly generated signal of the second set ok ink point features was randomly generated.

The noise deducting module 164 is configured to regenerate the second sets of ink point features by deducting the predicted noise from the respective second set of ink point features.

For each character label, the selected first and generated second sets of ink point features of the retrieved sequence of ink points are applied as input data of an initial step of to the reverse diffusion process, wherein the diffusion step of the reverse diffusion model may be input through the diffusion feature data of the first set of ink point features.

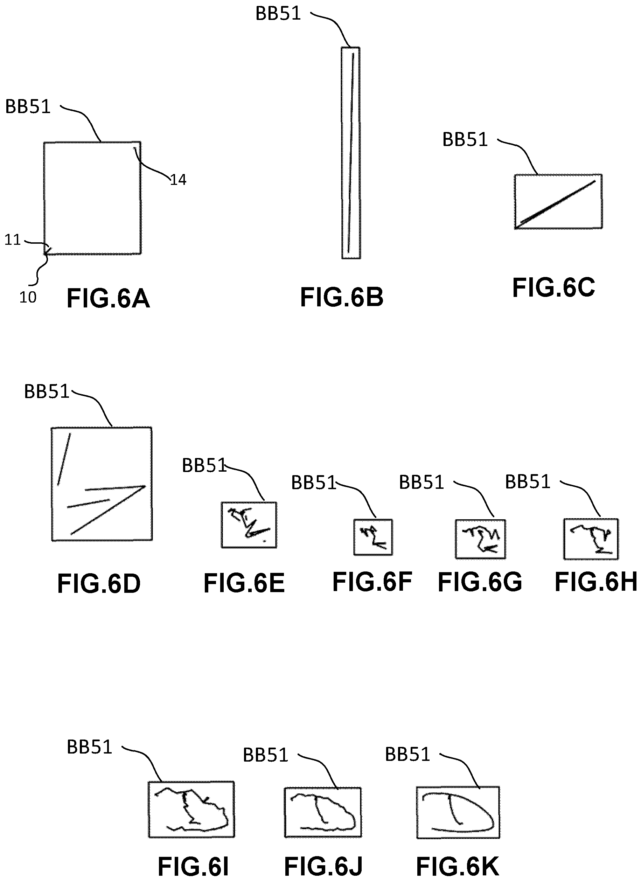

For example, Figures 6A-6K shows ten illustrations of the path of the generated second sets of ink point features of the character CH1 of the sequence of character labels, along a reverse diffusion process of 50 predetermined diffusion steps at ten selected example intermediate diffusion steps respectively. Figures 6A-6J show examples of the resulting first character label 'D' depicted according to the second set of ink point features at different diffusion steps: at the very first step 0 (corresponding to the initial generated step of substantially full noise) at Figure 6A, step 10 at Figure 6B, step 15 at Figure 6C, step 22 at Figure 6D, step 26 at Figure 6E, step 28 at Figure 6F, step 30 at Figure 6G, step 33 at Figure 6H, step 35 at Figure 6I, step 42 at Figure 6J and step 50 (corresponding to the final regenerated step with no noise) at Figure 6K.

Figure 6A shows the physical trace of the initial generated sequence of ink points simulating a version of the first character label CH1 ('D') handwritten by the selected user identified as US3. The initial selected set of the first ink point features corresponds to:
- a character feature ChF41 implemented as the character embedding indexing the character 'D';
- a context features CxF41 comprising the first and second ink point feature sets of the neighboring sequence of ink point retrieved for the character label CH2 ('i'), wherein the second ink point feature set of the second character label CH2 comprises selected first and generated second sets of ink point features, the generated second set of ink point feature of the character CH2, similarly generated, corresponds to full noise;
- a user embedding indexing the user US3;
- a diffusion feature identifying the current step of the diffusion model process set at the very first step.
- A bounding box feature defining the randomly generated bounding box BB41 as coordinates of one and opposite corners BB41a and BB41b of the bounding box wherein the randomly generated ink points coordinates are enclosed in the generated bounding box BB41;
- The path features of the retrieved ten ink points, PaF10 to PaF19, for generating the physical trace of the first character label CH1, including the coordinates CO10 to CO19, the pen-up state P-Up10 to P-Up19, the End-Of-Character state EoC10 to EoC19 and the End-Of-Sequence EoS10 to EoS19.

The Figure 6A shows the resulting physical trace of the first character CH1 of the received input string at the initial step of the reverse diffusion process. A square of the randomly generated bounding box BB1 is represented. All the ink points are predicted and printed according to the randomly generated coordinates, pen-up states, end-of-character states, and end-of-sequence states, therefore this initial random generation of the character 'D' actually shows three ink points 10, 11 and 14 printed at their respective coordinates (CO10, CO11 and CO14) wherein the pen-up state is randomly set as false for the ink points 10 and 14 and the pen-up state is set as true at the ink points 11 to 13 and 15 to 19 leading to further non printed ink points sequences.

The figure 6B shows the resulting physical trace of the first character CH1 at the tenth diffusion step of the reverse diffusion process. The bounding box BB41 coordinates and ink points 10 to 19 definitions including the coordinates CO10 to CO19 and pen-up states P-Up10 to P-Up19 have been regenerated. The output noise was predicted iteratively at each iteration of the process from the initial step 0 until the tenth step. The predicted output noise at each step was iteratively deducted from the second sets of ink point features input together with the respective first set of ink point features. The resulting denoised second set of ink point features constitutes the input to the next iteration of the neural network, the respective first set of ink point features may be input together with the resulting denoised second set of ink point features. At the tenth step the resulting physical trace of character label 'D' still comprises a certain share of added noise where in the printed physical trace deducted from the second sets of ink point features shows an undefined pattern.

The Figures 6C to 6H show the resulting physical trace of the first character CH51 including the regenerated bounding box BB51 at the selected example 22^{nd}, 26^{th}, 28^{th} 30^{th}, 33^{rd} diffusion steps of the reverse diffusion process. The output noise predicted at each iteration, according to the variance schedule of the diffusion model, is incrementally deducted from the current second sets of ink point features. The printed output of regenerated second sets of ink point features shows patterns slowly converging towards the readable physical trace of character depicting the first character label 'D'.

The Figures 6I to 6K show the resulting physical trace of the first character CH51 including the regenerated bounding box BB51 at the selected example 35^{th}, 42^{nd}, 50^{th} diffusion steps of the reverse diffusion process. The printed output of regenerated second sets of ink point features shows patterns identified as the readable physical trace of the character depicting the first character label 'D'. The Figure 6K shows the resulting first character of the sequence of character labels resulting from the printed second set of ink point features with no added noise. The iterative reverse diffusion process has deducted, from the signal, the full noise initially generated in the initial generated ink point features to depict (or define the path of) a handwritten version of the first character label CH51 simulating the handwriting of the user identified as user 3.

The handwritten character concatenating module 170 is configured to concatenate the depicted handwritten versions of the respective character labels. The regenerated second set of ink point features comprises data to reconstruct a handwritten version of the received input string simulating the selected user handwriting.

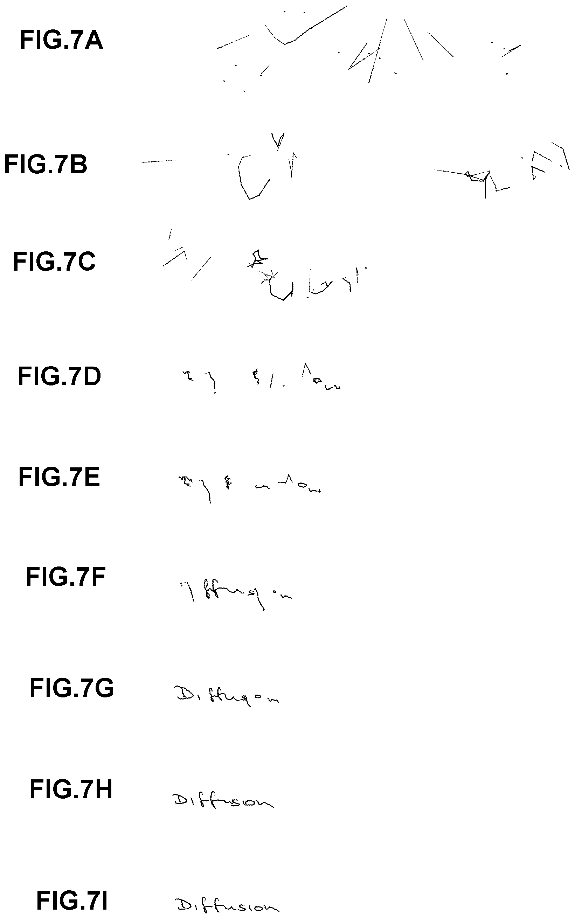

For example, Figures 7A-7I show the concatenated physical trace of the sequence of character labels (CH51 to CH59) at different diffusion steps arbitrarily chosen to illustrate the ongoing reverse diffusion process of regenerating the second set of ink point features at steps 20, 24, 28, 30, 32, 40, 44 and the final step 50, respectively. The Figures 7A-7I shows the resulting physical trace of the regenerated second sets of ink point features for each character labels of the received input string 500. Each physical trace of each character label resulting from the regenerated second sets of ink point features at each chosen step is printed. The bounding boxes BB51 to BB59 (not shown) are aligned with each other to depict (or define) the whole input string, the physical trace is following up from one character to the next one according to the respective ink point coordinates. The trained diffusion model allows to regenerate each character by taking into account the segmented previous and following characters thanks to the context features injecting the data of previous regenerated character and of the following to-be-regenerated character.

According to a particular embodiment depicted in Figure 2, the computing device is configured to train the neural network 162.

The handwritten text receiving module 210 is configured to receive handwritten text input by identified users. The handwritten text samples may be entered onto the input area 4 through the use of gestures in relation to the input surface 104, e.g., through touch, force and/or proximity depending on the screen technology of the device 100. The handwritten text samples are labelled with the identified user as the source of the handwritten text. The handwritten text is input by the identified user. Each identified user has a unique style of handwriting wherein the characteristics of handwriting may include the specific shape of letters, e.g. their roundness or sharpness; regular or irregular spacing between letters; the slope of the letters; the rhythmic repetition of the elements; the pressure to the paper; the average size of letters; the thickness of letters.

The handwritten text comprises a plurality of ink points and a plurality of timestamps associated respectively with the plurality of ink points. The plurality of ink points are localized in a rectangular coordinate space with each ink point being associated with (X,Y) coordinates in the rectangular coordinate space. Therefore, each ink point is defined by a position IP(X) ,IP(Y) and an associated timestamp (t).The handwritten text is recognized and segmented into sequences corresponding to the characters of the recognized handwritten text. For each character, the plurality of ink points defining a sequence of a segmented character are resampled within the recognized character segment. Each character path is resampled into a sequence of a fixed number of ink points. Therefore, each segmented character of the handwritten text is defined by the same fixed number of ink points, for example in Figure 4B, the five characters of the handwritten text are resampled into sequences of 10 ink points. The first character CH41 'h' is defined by the resampled ink points RIP10-RIP19, the second character CH42 'e' is defined by the resample ink points RIP20-RIP29.

The first and second sets of ink point features defining module 220 is configured to define, for each ink point of each segmented sequence, the respective first and second sets of ink point features.

The first set of ink point features comprise the character feature, the user feature, the diffusion feature and context features of the respective ink point.

The character feature is retrieved from the recognition process of the received handwritten text. The sequence of ink points represents a character therefore each ink point is further characterized according to the character it belongs to. The character held by a current ink point is represented by a character embedding indicating the occurrence of one character as indexes of the dictionary.

The user feature is retrieved from the identification of the users as the source of the respective handwritten character. The identified user may be represented by a user embedding indicating users as indexes of a fixed size vector of identified users used to store identified users. The identified users provided samples of handwritten input sequences gathered in the training dataset. The training dataset includes text handwritten by several identified users for training the diffusion model. The training dataset comprises text from at least one identified user.

The diffusion feature comprises the index of a current step of diffusion of the predetermined number of steps of diffusion. The initial step of diffusion is defined as 0. The diffusion feature is updated at each iteration of the iterative process of the diffusion model, the iterative process may be a forward diffusion, or a reverse diffusion process.

The context features include first and second ink point features of respective neighboring characters. The respective neighboring characters are the respective previous and following characters of each character of the sequence of characters. Therefore, the neighboring characters of the first character of the sequence of characters is the second character of the sequence of characters. The neighboring characters of the last character of the sequence of characters is the previous character of the last character.

Therefore, the set of context features of an ink point includes data of the previous and following character segments. The context features of the current ink point comprise the ink features of the previous and following character ink points.

The second set of ink point features comprise bounding box features and path features.

The bounding box features include two sets of coordinates defining the location of a bounding box enclosing the sequence of the fixed number of ink points of each character.

The path features describe an ink point within the sequence of ink points, capturing information about the handwriting input path, including coordinates of the ink point, a pen-up state, an end-of-character state and an end-of-sequence state of the respective ink point.

Each ink point coordinate may be encoded into a positional encoding. Positional encoding describes the location or positional information of an entity in a sequence so that each position is assigned a unique representation.

A transformer type neural network may be used to generate encoded ink point features. The transformer may comprise a positional encoder and a positional decoder, as further explained below, wherein the coordinates of each ink point are mapped to a vector. Hence, the output of the positional encoder may be a matrix, where each row of the matrix represents the encoded ink point features of the sequence of ink points summed with their positional information.

The bounding box features and the path features are defined according to the received handwritten text samples which is further recognized and segmented as object, such as character, by the handwriting recognition system, as explained above.

The forward diffusion processor 230 is configured to perform, for each recognized character, a predetermined number of diffusion steps of a forward diffusion process to add noise to the defined second set of ink point features of the ink points of the respective sequence wherein the final second set of ink point features of the respective sequence corresponds to full noise.

The second sets of ink point features of each ink point is therefore defined according to the recognized handwritten text. The recognized handwritten text represents the original dataset for the diffusion model. The diffusion model is processed in two stages, a first stage of a forward diffusion process that generate data by progressively adding noise to the original dataset and then learning to reverse this process. The noise is a distortion in data, that is supposedly unwanted by the perceiver of the data, it can be anything extraneous to the original dataset. The noise can be defined by a randomly varying function of time and/or space and can thus be characterized by a probability distribution function such as a gaussian distribution. In the forward diffusion process, the added noise is defined, at each step, by a certain quantity of the gaussian distribution scheduled over a certain space variance.

The forward diffusion process incrementally adds noise to the original data, wherein a certain number of diffusion steps allow to define an increasing space variance of random data around the actual sample. The earlier diffusion steps define small quantity of random data generated according to the gaussian distribution and spatially spread in the actual sample data. The Figures 6I and 6J illustrate the small quantity of added noise wherein the coordinates of the ink points depicting the character 'D' are lightly distorting the signal. The small quantity of noise shows a narrow space variance around the actual sample data. The later diffusion steps define large quantity of random data generated according to the gaussian distribution and spatially spread in the actual sample data. The large quantity of noise corresponds to wide space variance of the statistical distribution. The Figures 6B and 6C illustrate the large quantity of added noise wherein the coordinates of the ink points depicting the character 'D' are totally distorting the signal. The full noise (illustrated at Figure 6A) generated at the last step of the forward diffusion process corresponds to an isotropic gaussian distribution wherein the character coded by the second set of ink point features are generated as random data. At each step of the forward diffusion process, the added noise is generated according to an increasing variance schedule to progressively converge towards a fully random dataset.

The reverse diffusion processor 240 is configured to train the reverse diffusion process of the diffusion model to predict, for each character, the added noise comprised in the second set of ink point features. The reverse diffusion processor comprises a random diffusion step selecting module 242, a neural network 162 and a loss function optimizing module 244.

The reverse diffusion process involves predicting the amount of noise and recognizing the noise patterns introduced at each step and training a neural network to denoise the data accordingly. Training the neural network is aimed at creating new handwriting data similar to the original dataset through a complex reconstruction.

The random diffusion step selecting module 242 is configured to, for each character, select randomly a performed diffusion step from the forward diffusion process of the predetermined number of diffusion steps. The respective first and second sets of ink point features from the sets of ink point features of the randomly selected diffusion step comprise the noise added at the randomly selected diffusion step of the forward diffusion process. The respective first and second sets of ink point features represent the input data to the training of the neural network, wherein the neural network is further trained to predict the amount of noise added to the respective second set of ink point features and which is known from the outcome of the forward diffusion process.

The neural network 162 is configured to predict the added noise comprised in the respective second set of ink point features at the randomly selected diffusion step by applying the selected first and second sets of ink point features as input to the neural network.

The computing device models the reverse diffusion process with the neural network. The neural network can be made from a Recurrent Neural Network RNN, such as a Long Short-Term Memory LSTM neural network, a Gated Recurrent Unit GRU neural network or a Transformers.

For each character of the training dataset, the computing device selects randomly performed forward diffusion steps, for example a thousand to ten thousand randomly selected forward diffusion steps, from the predetermined number of diffusion steps and the respective first and second sets of ink point features from the sets of ink point features of the randomly selected diffusion step, wherein the sets of ink point features comprise the noise added at the randomly selected diffusion step. Therefore, the neural network is trained according to random diffusion data including different labels and different users. All possible combinations of labels and identified users, which may not have been associated in the training data set, are learnt by the neural network, the computing device is able to infer any combination of users and labels even if these combinations are not in the training dataset.

The computing device models the reverse diffusion process with a neural network and predicts the added noise at the selected diffusion step.

The loss function optimizing module 244 is configured to train the neural network by comparing the predicted noise and the noise, added at the forward diffusion step, and comprised in the respective second set of ink point features.

In accordance with a particular embodiment of the present invention, a method for generating an ink point sequence to simulate a handwriting style of an identified user (also called hereinafter method for ink point sequence generation), which is implemented by the computing device DV, is now described with reference to Figure 3. More specifically, the computing device DV as further described (Figures 1 and 2) implements this method by executing the application 12 stored in the memory 7.

The description of each step of the method represented in Figure 3 may apply in an analogous manner to each corresponding module of the computing device DV as shown in Figures 1 and 2 and further described in Figures 4 to 7.

In a receiving step S110, the computing device receives a character string input, each character of the character string having a character label. The character string input may be obtained by the computing device in any suitable manner. For example, the sequence of character labels may be obtained by typing via keyboard or text input by voice recognition or stored in the memory 7. The sequence of character labels may be obtained from processing handwritten text and for example suggesting text or correcting the misspellings.

In an identified user selecting step S120, the computing device selects a user from a database of identified users. In one example, the user is selected in response to a selection of an identified user, also referred as a selection of an available style, through a selection menu. Different users have provided handwritten text samples used by the computing device as sources or models for simulating the handwriting of one of the users. The users are identified with an identifier label for the purpose of labelling a unique handwriting style. Each user has a unique style of handwriting wherein the characteristics of handwriting may include the specific shape of letters, e.g. their roundness or sharpness; regular or irregular spacing between letters; the slope of the letters; the rhythmic repetition of the elements; the pressure to the paper; the average size of letters; the thickness of letters. The handwriting style of the identified user is captured by receiving handwritten text samples by the identified users, as further explained below.

In a retrieving step S130, the computing device retrieves, for each character label of the sequence of character labels, a sequence of a predetermined or fixed number of ink points.

The ink point sequence is a sequence of features including data allowing the computing device to further reconstruct the handwritten path of a character label within the received sequence of character labels. An ink point feature is a set of information describing a point of a path of an ink stroke and including data stored as variables, objects or vectors. The ink point sequence gathers all necessary information for defining a handwritten version of a character label. Each ink point of the ink point sequence defining a handwritten character comprises a first set and a second set of ink point features.

The first set of ink point features comprises a character feature, a user feature, a diffusion feature and context features of the respective ink point, as further explained below.

The second set of ink point features comprises path features wherein the path features comprise coordinates, a pen-up state, a segmentation state and an end-of-sequence state of the respective ink point, as further explained below.

In a first ink point features selecting step S140, the computing device is selecting, for each ink point of the sequence of ink points, the first set of ink point features comprising the character feature, the user feature, the diffusion feature and the context features.

The character feature comprises a character embedding. The sequence of ink point features includes data of a handwritten character therefore each ink point is further characterized according to the character it belongs to, according to the sequence of character labels received at step S110. The character held by a current ink point is represented by a character embedding indicating the occurrence of one character as indexes of a fixed size vector of symbols, including a blank character, said vector of symbols referred to as a dictionary and used to store characters and symbols of an alphabet, for example the Latin alphabet. The character embedding includes an index used for retrieving the corresponding typeset character of the language.

Each ink point is characterized by a character index indicating the position of the respective character in the sequence of characters.

The user feature comprises a user identifier.

The sequence of ink points includes data of a character handwritten by an identified user, therefore each ink point is further characterized by the identified user as the source of the respective character, according to the identified user selected at step S120. The identified user may be represented by a user embedding indicating users as indexes of a fixed size vector of identified users used to store identified users. The identified users preliminary provided samples of handwritten input sequences gathered in a training dataset as further explained below. The user feature is set according to the selected user.

The diffusion feature comprises an index of a diffusion step of a diffusion model.

Diffusion models are advanced computational models including machine learning algorithms that generate data by progressively adding noise to a dataset and then learning to reverse this process. The essential idea of a diffusion model is to systematically and slowly destroy structure in a data distribution through an iterative forward diffusion process.

Then, a reverse diffusion process is learnt to restore structure in the data, yielding a highly flexible and tractable generative model of the data. The diffusion model principle is presented in Sohl-Dickstein, J., Weiss, E., Maheswaranathan, N., & Ganguli, S. (2015, June). Deep unsupervised learning using nonequilibrium thermodynamics. In International conference on machine learning (pp. 2256-2265). PMLR. This approach allows learning, sampling, and evaluating probabilities in deep generative models.

Therefore, the computational model used, comprises two processes: a forward diffusion process that gradually adds noise to input data until signal of the input data is destroyed and a reverse diffusion process trained to remove the noise from the signal to produce sample data matching the input data after finite time.

The forward diffusion process begins by sampling from a basic, usually Gaussian, distribution and performs a predetermined number T of steps of diffusion. This initial simple sample undergoes a series of reversible, incremental modifications, where each step introduces a controlled amount of complexity. It gradually layers on complexity, often visualized as the addition of structured noise. This diffusion of the initial data through successive transformations allows the model to capture and reproduce the complex patterns and details inherent in the target distribution. The ultimate goal of the forward diffusion process is to evolve these simple beginnings into samples that closely mimic the desired complex data distribution. This really shows how starting with minimal information can lead to rich, detailed outputs.

The reverse diffusion process involves recognizing the specific noise patterns introduced at each step of the predetermined number of steps T and training the neural network to denoise the data accordingly. This involves complex reconstruction through a neural network. The model uses its acquired knowledge to predict the noise at each step and then carefully removes it.

The sets of features for each ink point of the sequence of ink points are defined to characterize and process handwritten data through a diffusion model.

The second set of ink point features are gradually randomized according to an incremental noise added according to the defined step of the reverse diffusion process. The second set of ink point features are gradually regenerated according to the decremental noise deducted from the generated second set of random ink point features, as explained below.

The diffusion feature comprises the index of a current step of diffusion of the predetermined number of steps of diffusion. The diffusion feature is updated at each iteration of the iterative process of the diffusion model, the iterative process may be a forward diffusion, or a reverse diffusion process.

The diffusion feature of the first ink point features is therefore an index of the diffusion step of the on-going forward or reverse diffusion process wherein the diffusion step allows to anticipate the amount of noise comprised in the respective second set of ink point features.

In a forward diffusion process, the diffusion step is set from an initial step, corresponding to substantially no noise added to the second set of ink point features to the highest predetermined step, corresponding to substantially full noise added to the second set of ink point features.

Whereas, in a reverse diffusion process, the diffusion step is set from an initial step corresponding to substantially full noise added to the second set of ink point features, to the final step corresponding to substantially no noise added to the second set of ink point features.

The context features include first and second ink point features of respective neighboring characters. The respective neighboring characters are the respective previous and following characters of each character of the sequence of characters, according to the sequence of character labels received at step S110. Particularly, the neighboring characters of the first character of the sequence of characters is the second character of the sequence of characters. The neighboring characters of the last character of the sequence of characters is the previous character of the last character.

Therefore, the set of context features of an ink point includes data of the previous and following character segments. The context features of the current ink point comprise the ink point features of the previous and following character sequences.

In a second ink point feature generating step S150, the computing device is generating, for each ink point of the sequence of a fixed number of ink points, the second set of ink point features, wherein ink point features of the second set are randomly generated. The second set of ink point features comprise bounding box features and path features.

The bounding box features include two sets of coordinates defining the location of a bounding box enclosing the sequence of the fixed number of ink points of each character.

The path features describe an ink point within the sequence of ink points, capturing information about the handwriting input path, including coordinates of the ink point, a pen-up state, an end-of-character state and an end-of-sequence state of the respective ink point, as further explained below.

The handwriting path is composed of strokes. A stroke is characterized by at least the stroke initiation location, the stroke termination location, and the path connecting the stroke initiation and termination locations.

The coordinates of the sequence of ink points depicting (or defining) a character label are enclosed in the bounding box defined by two opposite corners of the bounding box.

The stroke initiation location and the stroke termination location may be captured as a Boolean ink point feature referred to as a true pen-up state at the last ink point of the stroke.

The pen-up state set as true indicates that a current ink point, included into the current stroke, is the end of the user original handwritten stroke. A pen-up state set as false indicates that the current ink point is concatenated with the following ink point in the user original handwritten stroke.

The last ink point of the sequence of ink points is captured as a Boolean ink point feature referred as an end-of-sequence state indicating that a current ink point is the last point of the sequence of ink points.

For each ink point, the coordinates, the pen-up state, the end-of-character state and the end-of-sequence state are generated randomly according to a Gaussian distribution (also referred to as normal distribution). For each ink point, the generated second set of random ink point features corresponds to an initial state wherein the diffusion feature is the first step of the diffusion process.

In a second ink point features regenerating step S160, the computing device is applying, for each character label of the sequence of character labels, the first and second sets of ink point features to a reverse process of a trained diffusion model of the predetermined number of diffusion steps to generate, at each diffusion step, a version of the second set of ink point features corresponding to the respective diffusion step and depict a handwriting version of the respective character label until all the character labels have been depicted.

In the second ink point features regenerating step S160, the diffusion feature, corresponding to the diffusion step of the trained reverse diffusion model, is iterated from the initial state of diffusion, until the end of the iterative process, set by the predetermined number of diffusion steps, to generate, at each diffusion step, a version of the second set of ink point features corresponding to the respective diffusion step. The last step of the predetermined number of diffusion steps is scheduled to depict a handwritten version of the respective character label.

Applying, for each character label, the first and second sets of ink point features to the reverse process of the trained diffusion model is an iterative process of the predetermined number of diffusion steps. The iteration of the reverse process performs a gradual transformation of the generated second sets of random ink point features until the predetermined number of steps is processed. The reverse diffusion process is iteratively denoising the second sets of ink point features until it depicts the handwriting version of the respective character simulating the handwritten style of the selected user. For each diffusion step of the trained diffusion model, the first and the generated second sets of ink point features are applied to a trained neural network, to predict noise of the second sets of ink point feature of the respective diffusion step. Therefore, at each iteration, the second sets of ink point features are regenerated by deducting or removing the predicted noise from the respective second set of ink point features. The noise comprised in each second set of ink point features is predicted by the neural network wherein the neural network is trained according to the diffusion model, as further explained below.

For each character, at the last iteration of the diffusion model, the regenerated second sets of ink point features including the coordinates and the pen-up states, allows reconstructing a physical trace within the rectangular coordinate space of a handwritten character simulating the user handwriting.

In a concatenating step S170, the computing device is concatenating the depicted handwritten versions of the respective character labels according to the sequence of character labels received at step S110. The computing device is joining each path of the characters according to the bounding box features and the path features.

In one example; the ink point coordinate feature of the generated path features may be decoded through a positional decoding step, wherein the positional decoding step converts the coordinate features generated as a unique representation of the ink point into associated (X,Y) coordinates in the rectangular coordinate space.

The bounding box coordinates allow to locate the extent of the character onto the document, then each ink point of the respective character sequence is located within the bounding box space. The path is drawn or not between two successive ink points according to the pen-up state. The segmentation state indicates the last ink point drawn to depict the character within the respective bounding box.

In accordance with a particular embodiment of the present invention, a method for training the reverse diffusion model is described with reference to Figure 3. More specifically, the computing device DV as further described (Figure 2) implements this method by executing the application 12 stored in the memory 7.

In a handwritten text receiving step S210, the computing device DV receives (or obtains) data representing user handwritten input as a sequence of ink points in a rectangular coordinate space associated with a respective sequence of time points.

Handwriting input may be entered on or via the input surface and processed by the processor as digital ink. A user may enter a stroke with a finger or some instrument such as a pen or stylus suitable for use with the input surface.

The handwriting input is therefore represented by an ink point sequence capturing a handwritten path generated by the computing device or a physical trace made by the users.

Each ink point IP is characterized by an ink point sequence index indicating the position of the ink point in the ink point sequence.

A handwritten input comprises a plurality of ink points and a plurality of timestamps associated respectively with the plurality of ink points. The plurality of ink points are localized in a rectangular coordinate space with each ink point being associated with (X,Y) coordinates in the rectangular coordinate space. Therefore, each ink point is defined by a position (X,Y) and an associated timestamp (t).

The handwritten input is characterized by, for each ink point, at least four types of ink point features capturing data about the handwriting input including path features, character features, diffusion features and context features.

The received handwritten text constitutes the data set for training the diffusion model. The user handwritten input may be individual characters, words or lines of text, or any combination thereof. The handwritten input is performed by several users. The users are identified by a user identifier in a user database. The users are identified with an identifying label for the purpose of labelling a unique handwriting style. The training dataset comprises text from at least one identified user. However, texts from a large number of identified users allow for different styles to be learnt. In a training example, handwriting samples from at least one hundred users were used. In another training example, samples from at least four hundred users were used. Furthermore, the more user samples used, the more likely that certain symbols are used and learnt with different styles. Each user has a unique style of handwriting wherein the characteristics of handwriting may include the specific shape of letters, e.g. their roundness or sharpness; regular or irregular spacing between letters; the slope of the letters; the rhythmic repetition of the elements; the pressure to the paper; the average size of letters; the thickness of letters. Therefore, the received handwriting input is further recognized and segmented by a handwriting recognition HWR system.

The HWR system includes stages (and corresponding modules) such as preprocessing, recognition and output. The preprocessing stage processes the digital ink to achieve greater accuracy and reducing processing time during the recognition stage. This preprocessing may include normalizing of the path connecting the stroke initiation and termination locations by applying size normalization and/or methods such as β-spline approximation to smooth the input. The preprocessed strokes are then passed to the recognition stage which processes the strokes to recognize the objects formed thereby including elements and or characters.

The recognition stage may include different processing elements or experts. Three expert systems (or modules), a segmentation expert system (or segmentation module), a recognition expert system (or recognition module), and a language expert system (or language module), are illustrated which collaborate through dynamic programming to generate the output. An expert system is a computer system emulating the decision-making ability of a human expert. Expert systems are designed to solve complex problems by reasoning through bodies of knowledge, represented mainly as if-then rules rather than through conventional procedural programming.

Some aspects of these experts are described here below to facilitate understanding of the present invention. However, no further details are provided to avoid unnecessarily obscuring the present disclosure. Details of implementing handwriting recognition can for instance be found in EP patent application N° 1 836 651 B1.

The segmentation expert defines the different ways to segment the input strokes into individual element hypotheses, e.g., alphanumeric characters and mathematical operators, text characters, individual shapes, or sub expression, in order to form expressions, e.g., words, mathematical equations, or groups of shapes. For example, the segmentation expert may form the element hypotheses by grouping consecutive strokes of the original input to obtain a segmentation graph where each node corresponds to at least one element hypothesis and where adjacency constraints between elements are handled by the node connections.

The recognition expert provides classification of the features extracted by a classifier and outputs a list of element candidates with probabilities or recognition scores for each node of the segmentation graph.

The recognition expert associates a list of character candidates with probabilities or recognition scores for each node of the segmentation graph. These probabilities or recognition scores are based on language information. The language information defines all the different characters and symbols of the alphabet underlying to the specified language. This information is language dependent and comprises general differences in alphabets as well as the ability to recognize various individual and regional styles of writing the alphabets. For instance, the way an individual writes a "7" can be quite different depending on whether that individual is from the USA, France, or even Korea. The recognition expert may include two stages. An optional stage of the recognition expert, feature extraction, is based on a combination of dynamic and static features. For instance, the dynamic features can be extracted from the trajectory of the input stroke and are based on information such as position, direction, and curvature of the input stroke. Static features can be extracted from a bitmap representation of the input stroke and can be based on projections and histograms.

Then the recognition expert classifies the input or the extracted features. Many types of classifiers exist that could be used to address this recognition task, e.g., Support Vector Machines, Hidden Markov Models, or Neural Networks such as Multilayer Perceptrons, Deep, Convolutional or Recurrent Neural Networks. The choice depends on the complexity, accuracy, and speed desired for the task. The recognition expert outputs a list of character candidates with probabilities or recognition scores for each node of the segmentation graph.

Following segmentation and recognition of the handwriting input each segmented character is resampled into sequences of the fixed number of ink points. Therefore, the method comprises resampling the plurality of ink points of segmented character to generate a second plurality of ink points. Different resampling techniques may be used: temporal, spatial, or both. In an embodiment, resampling according to a spatial frequency is used, resulting in the second plurality of timestamps being characterized by a fixed duration between consecutive timestamps.

In an embodiment, the resampling comprises interpolating the plurality of ink points to generate the sequences of a fixed number of ink points corresponding to the characters segmented and recognized by the HWR system, as shown in Figure 4B. For example in Figure 4A, the first character CH41 of the handwriting text HWT is captured, by the computing device, as eighteen ink point IPX (1 - 19). In Figure 4B, following segmentation of the handwriting text, the first character CH41 is resampled and comprises ten ink points RIPX (1 - 10).

In a first and second feature set defining step S220, the computing device DV defines for each resampled ink point of each segmented sequence, the respective first and second sets of ink point features.

The first set of ink point features comprise the character feature, the user feature, the diffusion feature and context features of the respective ink point.

The character feature is retrieved from the recognition process of the received handwritten text. The sequence of ink points represents a character therefore each ink point is further characterized according to the character it belongs to. The character held by a current ink point is represented by a character embedding indicating the occurrence of one character as indexes of a fixed size vector of symbols, said vector of symbols including a blank character, and referred to as a dictionary, used to store characters and symbols of an alphabet, for example the Latin alphabet.

The user feature is retrieved from the identification of the users as the source of the respective handwritten character. The identified user may be represented by a user embedding indicating users as indexes of a fixed size vector of identified users used to store identified users. The identified users provided samples of handwritten input sequences gathered in the training dataset. The training dataset includes text handwritten by several identified users for training the diffusion model.

The second set of ink point features comprises the path features including coordinates, a pen-up state, a segmentation state and an end-of-sequence state of the respective ink point as explained above.

In a forward diffusion process performing step S230, the computing device performs a predetermined number of diffusion steps of a forward diffusion process to add noise to the defined second set of ink point features of the ink points of the respective sequence wherein the final second set of ink point features of the respective sequence corresponds to full noise.

At each step of the forward process, the forward diffusion process begins by a sampling of random noise values from a basic distribution, for example a Gaussian distribution. Each step introduces a controlled amount of structured noise according to a regulated variance schedule. The sampling undergoes a series of reversible, incremental modifications, wherein, at each step, it gradually layers on the addition of structured noise.

At each step, the Gaussian noise is incrementally added, resulting in a series of increasing noise added to the respective second set of ink point features. The noise added at each diffusion step is regulated by the variance schedule to lead to a nearly isotropic Gaussian distribution for sufficiently large number of steps, referred to as full noise.

This diffusion from the initial data through successive transformations allows the model to capture and reproduce complex handwritten character patterns and details inherent to handwriting style of an identified user. The ultimate goal of the forward diffusion process is to evolve from simple random second sets of ink point features to second sets of ink point features that correspond to handwritten characters that closely mimic the desired handwriting style of the identified user. This will allow, in a reverse process as further explained below, to start with minimal information to reach detailed outputs in the form of consistent second sets of ink point features leading to possible handwritten versions of the sequence of character labels.

In an on-going forward diffusion process, the context features of a current ink point include the ink point feature sets of the previous and following characters. Therefore, the ink point feature sets of the previous character comprise added noise generated at the previous iterations of the diffusion process. The ink point feature sets of the following character comprise the second ink point features defined according to the training set (the received handwritten text input by identified users), which have not been processed according to the forward diffusion process yet.

In a reverse diffusion process training step S240, the computing device trains the reverse diffusion process of the diffusion model to predict, for each character, the added noise comprised in the second set of ink point features.

The reverse diffusion process involves predicting the amount of noise of a current input data introduced at each step of the predetermined number of diffusion steps and deducting the predicted noise patterns from the input data. Predicting the amount of noise is achieved by training a neural network to reverse the diffusion process of the number of diffusion steps T. During the forward process, as the step gets very large and close to the predetermined number of steps, the added noise behaves like an isotropic Gaussian distribution. Therefore, the reverse diffusion process is able to take, as initial step, second sets of ink point features generated from a normal distribution. At the initial and following steps, the computing device applies current input data, iteratively, to generate noise which is deducted from the current input to generate next input data. At the final predetermined step, final data gets similar to the original dataset and depicts a handwritten version of the respective character label, as explained in the second ink point features regenerating step S160.

For each character of the training dataset, the computing device selects randomly a performed diffusion step from the predetermined number of diffusion steps and the respective first and second sets of ink point features from the sets of ink point features of the randomly selected diffusion step, wherein the sets of ink point features comprise the noise added at the randomly selected diffusion step.

The computing device models the reverse diffusion process through a neural network. The reverse process can be learnt and used to predict specific characteristics like the added noise. The neural network may comprise a Recurrent Neural Network RNN, such as a Long Short-Term Memory LSTM neural network, a Gated Recurrent Unit GRU neural network, a Convolutional Neural Network or a Transformer, i.e. a neural network based on attention mechanisms.

The computing device applies the selected first and second sets of ink point features at the randomly selected diffusion step to the neural network to predict the added noise introduced in the respective second set of ink point feature at the randomly selected diffusion step.

In the on-going reverse diffusion process, the context features of a current ink point include the ink point feature sets of the previous and following character. Therefore, the ink point feature sets of the previous character comprise the sets of second ink point features regenerated at the previous iterations of the process, whereas the ink point feature sets of the following character comprise the sets of second ink point features generated randomly including the coordinates and the pen-up state of the defined ink points from a gaussian noise distribution.

The computing device trains the neural network by optimizing a loss function between the predicted noise and the added noise comprised in the respective second set of ink point features. Optimizing the loss function may comprise, for example, minimizing the mean square error between the predicted noise, that is just predicted from training the neural network and the added noise generated during the forward diffusion process of step 230, at the respective diffusion step.

## Claims

1. Method for generating a sequence of ink points to simulate a handwriting style of an identified user, comprising:
- receiving a character string input, each character of the character string having a character label ;
- selecting the identified user;
- retrieving, for each character label, a sequence of a fixed number of ink points;
- selecting, for each retrieved ink point, a first set of ink point features;
- generating, for each retrieved ink point, a second set of random ink point features;
- applying, for each character label, the first and second sets of ink point features to a reverse process of a trained diffusion model of a predetermined number of diffusion steps to generate, at each diffusion step, a version of the second set of ink point features corresponding to the respective diffusion step, to depict a handwriting version of the respective character label until all the character labels have been depicted;
- concatenating the depicted handwritten versions of the respective character labels.

2. The method of claim 1,
wherein the first set of ink point features comprises a character feature, a user feature, a diffusion feature and context features,
wherein the second set of random ink point features comprises bounding box features and path features,
and wherein the context features include first and second ink point features of respective neighboring characters.

3. The method of claim 2, wherein the character feature corresponds to the label of the respective ink point.

4. The method of claim 2 or 3, wherein the user feature corresponds to an identifier of the selected user.

5. The method of any one of claims 2 to 4, wherein the diffusion feature corresponds to the first step of the predetermined number of diffusion steps.

6. The method of any one of claims 2 to 5, wherein the bounding box features correspond to two sets of coordinates defining the location of a bounding box enclosing the subsequence of the fixed number of ink points of each character.

7. The method of any one of claims 2 to 6, wherein the path features comprise coordinates, a pen-up state, a segmentation state and an end-of-sequence state of the respective ink point.

8. The method of any one of claims 2 to 7, wherein the neighboring characters comprise the respective previous and following characters of each character.

9. The method of any one of claims 2 to 8, wherein the neighboring characters of the first character of the character string comprises the respective following character of the first character and wherein the neighboring character of the last character of the character string comprises the respective previous character of the last character.

10. The method of any one of claims 7 to 9, wherein generating the second set of random ink point features comprises:
generating randomly the coordinates and the pen-up state of each defined ink point from a gaussian noise distribution.

11. The method of any one of claims 1 to 10, wherein applying, for each character label, the first and second sets of ink point features to the trained reverse process of the diffusion model comprises, for each diffusion step of the diffusion model:
a. applying, the first and the generated second sets of ink point features to a trained neural network, to predict noise of the second sets of ink point features of the respective diffusion step; and
b. generating, at each diffusion step, the version of the second set of ink point features corresponding to the respective diffusion step by deducting the predicted noise from the respective second set of ink point features;

12. The method of any one of claims 1 to 11, wherein the diffusion model is trained by:
- receiving handwritten text input by identified users, wherein the handwritten text is segmented into subsequences of the fixed number of ink points and recognized as character labels, corresponding to the characters of the recognized handwritten text;
- defining, for each ink point of each segmented subsequence, the respective first and second sets of ink point features;
- performing, for each recognized character, a predetermined number of diffusion steps of a forward diffusion process to add noise to the defined second set of ink point features of the ink points of the respective subsequence wherein the values of the final second sets of ink point features of the respective subsequence are randomly selected from an isotropic Gaussian distribution;
- training the reverse diffusion process of the diffusion model to predict, for each character, the added noise comprised in the second set of ink point features by:
∘ for each character, selecting randomly a performed diffusion step from the predetermined number of diffusion steps and the respective first and second sets of ink point features from the sets of ink point features of the randomly selected diffusion step, wherein the sets of ink point features comprise the noise added at the randomly selected diffusion step;
∘ training the neural network applying the selected first and second sets of ink point features to the neural network to predict the added noise comprised in the respective second set of ink point features at the randomly selected diffusion step; and by optimizing a loss function between the predicted noise and the added noise comprised in the respective second set of ink point features.

13. A computing device (DV) configured to generate a sequence of ink points to
simulate a handwriting style of an identified user, comprising:
- an input string receiving module (110) configured to receive a character string input, each character of the character string having a character label;
- an identified user selecting module (120) configured to select the identified user;
- an ink point retrieving module (130) configured to, for each character label, retrieve a subsequence of a fixed number of ink points;
- a first ink point features selecting module (140) configured to, for each defined ink point, select a first set of ink point features;
- a second ink point features generating module (150) configured to, for each defined ink point, generate a second set of random ink point features;
- a second set of ink point features regenerating module (160) configured to apply, for each character label, the first and second sets of ink point features to a reverse process of a trained diffusion model of a predetermined number of diffusion steps to generate, at each diffusion step, a version of the second set of ink point features corresponding to the respective diffusion step, to depict a handwriting version of the respective character label until all the character labels have been depicted.
- a handwritten character concatenating module (170) configured to concatenate
the depicted handwritten versions of the respective character labels.

14. A computing device (DV) of claim 13 wherein the second set of ink point features regenerating module (160) is coupled with:
- a trained neural network (162) configured, for each diffusion step of the trained diffusion model, to predict added noise comprised in the second sets of ink point features of the respective diffusion step from the first and the generated second sets of ink point features; and
- a noise deducting module (164) configured to generate, at each diffusion step, the version of the second set of ink point features corresponding to the respective diffusion step by deducting the predicted noise from the respective second set of ink point features.

15. A computing device (DV) configured to train a neural network comprising:
- a handwritten text receiving module (210) configured to receive handwritten text input by identified users, wherein the handwritten text is recognized and segmented into subsequences of the fixed number of ink points corresponding to the characters of the recognized handwritten text;
- a first and second sets of ink point features defining module (220) configured to define, for each ink point of each segmented subsequence, the respective first and second sets of ink point features;
- a forward diffusion processor (230) configured to perform, for each recognized character, a predetermined number of diffusion steps of a forward diffusion process to add noise to the defined second set of ink point features of the ink points of the respective subsequence wherein the final second set of ink point features of the respective subsequence corresponds to full noise;
- a reverse diffusion processor (240) configured to train the reverse diffusion process of the diffusion model to predict, for each character, the added noise comprised in the second set of ink point features comprising:
∘ a random diffusion step selecting module (242) configured to, for each character, select randomly a performed diffusion step from the predetermined number of diffusion steps and the respective first and second sets of ink point features from the sets of ink point features of the randomly selected diffusion step, wherein the sets of ink point features comprise the noise added at the randomly selected diffusion step;
∘ the neural network (162) configured to predict the added noise comprised in the respective second set of ink point features at the randomly selected diffusion step by applying the selected first and second sets of ink point features; and
∘ a loss function optimizing module (244) configured to train the neural network by comparing the predicted noise and the added noise comprised in the respective second set of ink point features.
